(19) Europäisches Patentamt
European Patent Office
Office européen des brevets

(11) EP 2 805 617 A1

(12) EUROPEAN PATENT APPLICATION
published in accordance with Art. 153(4) EPC

(43) Date of publication:
**26.11.2014 Bulletin 2014/48**

(21) Application number: **13738339.4**

(22) Date of filing: **18.01.2013**

(51) Int Cl.:
***A01N 37/34*** (2006.01) ***A01N 37/44*** (2006.01)
***A01P 3/00*** (2006.01)

(86) International application number:
**PCT/JP2013/050925**

(87) International publication number:
**WO 2013/108871 (25.07.2013 Gazette 2013/30)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.01.2012 JP 2012008677**

(71) Applicant: **Shirotake, Shoichi**
**Yokohama-shi, Kanagawa 244-0003 (JP)**

(72) Inventor: **Shirotake, Shoichi**
**Yokohama-shi, Kanagawa 244-0003 (JP)**

(74) Representative: **Keirstead, Tanis Evelyne et al**
**Mewburn Ellis LLP**
**33 Gutter Lane**
**London EC2V 8AS (GB)**

# (54) ANTIBACTERIAL AGENT AGAINST PLANT DISEASE-CAUSING BACTERIA

(57) Disclosed is a novel means by which plant diseases can be controlled. The antibacterial agent for a phytopathogenic bacterium/bacteria and the agent for plant disease control according to the present invention comprise as an effective ingredient cyanoacrylate polymer particles having an average particle diameter of less than 1000 nm, which particles contain at least one selected from the group consisting of amino acids, amino acid derivatives, and oligomers and polymers thereof, and substantially do not contain an active antibacterial ingredient effective against a phytopathogenic bacterium/bacteria. The agents according to the present invention have no risk of toxicity to humans, livestock, fishes and birds, as well as have a lower impact on the environment. Since this novel antibacterial agent is completely different from existing antibiotics, the agent can be used even in the case where a drug-resistant strain has emerged.



Printed by Jouve, 75001 PARIS (FR)

## Description

TECHNICAL FIELD

The present invention relates to an antibacterial agent for phytopathogenic bacteria.

BACKGROUND ART

Diseases of field and garden crops caused by pathogenic microorganisms such as filamentous fungi, bacteria and viruses are often growing into a serious issue in agriculture. Although a variety of agents for control of pathogenic microorganisms of various kinds have been developed, most of the agents with a high effect have a high impact on the environment. In addition, repeated use of the same kind of a control agent may render pathogenic microorganisms resistant to the agent, and use of such an agent is sometimes restricted. A control agent which has a lower toxicity to humans, livestock, fishes and birds, a lower impact on the environment, and has a high effect, is always being demanded.

On the other hand, mainly aiming at application to pharmaceuticals for human, in order to improve the effect of pharmaceuticals by drug delivery system (DDS) or by sustained release, studies of nano-encapsulation of drugs are now under way. For example, DDS in which a drug is encapsulated in cyanoacrylate polymer particles is known (Patent Documents 1, 2 and Non-patent Document 1). The present inventor and co-workers also have disclosed a method for producing cyanoacrylate polymer particles with little irregularity in particle diameter, antibiotic-containing particles, and plasmid-containing particles (Patent Documents 3 to 5). In a conventional method for synthesizing polymer particles, a saccharide(s) and/or a polysorbate(s) is(are) made to be present in the polymerization reaction system. These past studies aimed at DDS or sustained release of drugs.

Thereafter, the present inventor found that cyanoacrylate polymer particles *per se* have an antibacterial activity (Patent Document 6). Nano-sized polymer particles specifically adhere to the cell wall of Gram-positive bacteria to cause bacteriolysis. They exhibit their antibacterial activity by a mechanism completely different from the mechanism of antibiotics, and are effective even against multidrug-resistant bacteria such as MRSA and VRE.

Furthermore, the present inventor found that amino acid-containing cyanoacrylate polymer particles have an anticancer activity (Patent Document 7). Amino acids *per se* do not have special pharmacologic actions, but the anticancer activity of polymer particles is improved by incorporating an amino acid(s) into the particles. The anticancer activity is altered depending on which kind of amino acid the particles contain, and thus the particles are applicable to various kinds of cancers by selecting the kind of amino acid to be contained therein.

However, the antibacterial agent described in Patent Document 6 is an agent which exhibits its antibacterial action specifically against Gram-positive bacteria. Patent Document 7 discloses that cyanoacrylate polymer particles containing an amino acid(s) have an anticancer activity, but an antibacterial action of amino acid-containing polymer particles is not known.

PRIOR ART DOCUMENTS

PATENT DOCUMENTS

Patent Document 1: JP H11-503148 A
Patent Document 2: JP 3002-504526 A
Patent Document 3: JP 2008-127538 A
Patent Document 4: WO 2008/126846
Patent Document 5: JP 2008-208070 A
Patent Document 6: WO 2009/084494
Patent Document 7: WO 2010/101178

NON-PATENT DOCUMENTS

Non-patent Document 1: Christine Vauthier et al., Adv. Drug Deliv. Rev., 55, 519-548 (2003)

## SUMMARY OF THE INVENTION

### PROBLEMS TO BE SOLVED BY THE INVENTION

An object of the present invention is to provide a novel means by which plant diseases can be controlled.

### MEANS FOR SOLVING THE PROBLEMS

The present inventor has intensively studied to find that nano-sized cyanoacrylate polymer particles containing an amino acid can exhibit an antibacterial action against phytopathogenic bacteria, regardless of whether they are Gram-positive or not, thereby completing the present invention.

That is, the present invention provides an antibacterial agent for a phytopathogenic bacterium/bacteria, comprising as an effective ingredient cyanoacrylate polymer particles having an average particle diameter of less than 1000 nm, which particles contain at least one selected from the group consisting of amino acids, amino acid derivatives, and oligomers and polymers thereof, and substantially do not contain an active antibacterial ingredient effective against a phytopathogenic bacterium/bacteria. The present invention also provides an agent for plant disease control comprising the above-described antibacterial agent of the present invention. The present invention further provides a method for plant disease control, comprising bringing a plant body, plant seed, ground soil, planter soil, seedling box, farm equipment, or a gardening instrument into contact with cyanoacrylate polymer particles having an average particle diameter of less than 1000 nm, which particles contain at least one selected from the group consisting of amino acids, amino acid derivatives, and oligomers and polymers thereof, and substantially do not contain an active antibacterial ingredient effective against a phytopathogenic bacterium/bacteria.

### EFFECTS OF THE INVENTION

By the present invention, a novel antibacterial agent for a phytopathogenic bacterium/bacteria has been provided. The particles used in the present invention can be produced by polymerization of cyanoacrylate monomer(s). Cyanoacrylate has already been used as an adhesive for wound closure in the field of surgery, and indeed, it has been confirmed that cyanoacrylate particles do not show toxicity when administered to mice via a route such as intravenous route. Therefore, the agent according to the present invention has no risk of toxicity to humans, livestock, fishes and birds, as well as has a lower impact on the environment. Since this novel antibacterial agent is completely different from existing antibiotics, the agent can be used even in the case where a drug-resistant strain has emerged.

### MODE FOR CARRYING OUT THE INVENTION

In the present invention, cyanoacrylate polymer particles containing at least one selected from the group consisting of amino acids, amino acid derivatives, and oligomers and polymers thereof (which are also collectively hereinafter referred to as "amino acid etc.") are used as an effective ingredient.

In the present invention, the term "amino acid" refers to a compound which has an amino group(s) and a carboxy group(s) in the molecule, and as generally defined, the term also includes imino acids, which are cyclic secondary amine compounds in which a hydrogen of an amino group is substituted with another moiety in the molecule. Representative examples of the amino acid which may be used in the present invention include the 20 kinds of $\alpha$-amino acids which constitute natural proteins, but the examples are not restricted thereto and also include $\beta$-, $\gamma$-and $\delta$-amino acids and the like. Specific examples thereof include, but not limited to, arginine, histidine, lysine, aspartic acid, glutamic acid, alanine, glycine, leucine, valine, isoleucine, serine, threonine, phenylalanine, tryptophan, tyrosine, cystine or cysteine, glutamine, asparagine, proline, methionine, $\beta$-alanine, $\gamma$-aminobutyric acid (GABA; neurotransmitter), carnitine, $\gamma$-aminolevulinic acid, $\gamma$-aminovaleric acid and the like.

The term amino acid "derivative" refers to a compound having a structure in which any of the groups in the amino acid as defined above is(are) modified or substituted. Amino acid derivatives which naturally occur as biogenic substances may be usually preferably used in the present invention. Specific examples of the amino acid derivative which may be used include, but not limited to, creatine (an arginine derivative, 1-methylguanidinoacetic acid), ornithine (an arginine derivative, product of urea cycle), thyroxine (triiodothyronine; T4, belonging to aromatic amino acids), desmosine (a component of corneum elastin and collagen; having a structure in which side chains of three allysine molecules and a side chain of one lysine molecule are bound), hydroxyproline and hydroxylysine (components of gelatin and collagen), phosphoserine (an ester of serine and phosphoric acid; a component of casein), theanine (a tee component, glutamic acid derivative), kainic acid (an anthelmintic component of Corsican weed), tricholomic acid (a component of Lyophyllum), sarcosine (a component of yolks, ham, legumes; N-methylglycine) and the like.

In the present invention, the term amino acid "oligomer" refers to an oligopeptide in which not more than 10

amino acid residues are bound by a peptide bond(s), and the term amino acid "polymer" refers to a polypeptide in which not less than 11 amino acid residues are bound by peptide bonds. Both may comprise not only an amino acid(s) but also an amino acid derivative(s) as residues. The upper limit of the number of the residues of polypeptide is not restricted, and for example, may be not more than 500 residues. A polypeptide of 11-100 residues, 11-50 residues, 11-30 residues, 11-20 residues, or 11-15 residues may be preferably used.

An oligopeptide may be used more preferably than a polypeptide. In particular, a oligopeptide of 2-7 residues, 2-5 residues, or 2 or 3 residues may be more preferably used.

In the Examples described below, it is demonstrated that nano-sized (less than 1000 nm) cyanoacrylate polymer particles can be synthesized by using any of the 20 kinds of α-amino acids (i.e. arginine, histidine, lysine, aspartic acid, glutamic acid, alanine, glycine, leucine, valine, isoleucine, serine, threonine, phenylalanine, tryptophan, tyrosine, cystine or cysteine, glutamine, asparagine, proline, methionine), without using a saccharide and without using a polysorbate. It is demonstrated that nanoparticles can be produced by using any of neutral, acidic and basic amino acids, or any of linear, aromatic, imino, sulfur-containing structures, without using a saccharide and without using a polysorbate. Thus, not only the 20 kinds of α-amino acids actually used in the Examples below, but also the above-described other amino acids and amino acid derivatives may be used in the synthesis of nanoparticles. In addition, oligopeptides and polypeptides may also be used in the synthesis of nanoparticles, since they also have amino acid structures in the molecule.

As the cyanoacrylate monomer(s), an alkyl cyanoacrylate monomer(s) (the alkyl group is preferably a $C_1$-$C_8$ alkyl) is(are) preferred, and especially preferred is *n*-butyl-2-cyanoacrylate (nBCA) represented by the following formula, which has been used as an adhesive for wound closure in the field of surgery.

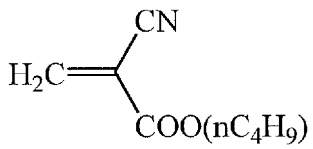

Particles containing amino acid etc. may be produced by the following two methods.

(1) Synthesis method in which a saccharide(s) and/or a polysorbate(s) is(are) used (conventional method)
(2) Synthesis method in which amino acid etc. is used alone (amino acid etc. alone synthesis method)

Methods for producing cyanoacrylate polymer particles containing a desired substance by a conventional method of (1) using a saccharide(s) and/or a polysorbate(s) are known as described in Patent Document 3, Patent Document 4 (antibacterial drug-containing particles), Patent Document 5 (plasmid-containing particles), Patent Document 7 (amino acid-containing particles) and so on. In the case where particles containing a desired amino acid etc. molecule(s) are produced in accordance with these conventional methods, the following steps may be carried out. That is, for example, an amino acid etc. molecule(s) to be contained in particles and at least one selected from saccharides and polysorbates are dissolved in a solvent; a cyanoacrylate monomer(s) is(are) added thereto while stirring the mixture; and the polymerization reaction is allowed to proceed while stirring the mixture as appropriate.

Saccharides are not restricted, and may be any of monosaccharides having a hydroxyl group(s) (e.g. glucose, mannose, ribose, fructose and the like), disaccharides having a hydroxyl group(s) (e.g. maltose, trehalose, lactose, sucrose and the like) and polysaccharides having a hydroxyl group(s) (e.g. dextran, mannan and the like). These saccharides may be either a cyclic form or a chain form, and in the case of cyclic form, saccharides may be either a pyranose form or a furanose form. Saccharides have various isomers, and any of such isomers may be used in the present invention.

Polysorbates are not restricted, and may be any of the known Tween series surfactants such as polyoxyethylene sorbitan monolaurate (trade name: Tween 20), polyoxyethylene sorbitan monooleate (trade name: Tween 80) and the like.

Any one of monosaccharides, disaccharides and polysaccharides and polysorbates may be used alone, or two or more of them may be used in combination. Among the above-described saccharides and polysorbates, glucose, dextran and Tween 20 (trade name) can be preferably used. As for the polymerization degree of dextran, dextran having an average molecular weight of about 50,000 or more is preferred. The upper limit of the molecular weight of dextran is not restricted, and the molecular weight is usually about 500,000 or less.

In the conventional method of (1), the concentration of saccharide(s) and/or polysorbate(s) (in the case where a plurality of kinds thereof are used, the total concentration thereof) is not restricted, and is usually about 0.5% to 10%, preferably about 0.75% to 7.5%. As used herein, the concentration of saccharides means w/v%, and the concentration of polysorbates means v/v%. For example, in the case where one saccharide is used alone, the above-described concentration ranges mean "0.5 w/v% to 10 w/v%" and "0.75 w/v% to 7.5 w/v%", respectively. In the case where 5 w/v% of saccharide and 1 v/v% of polysorbate are used in combination, the total concentration thereof is expressed as 6%. It should be noted that, in the case where a monosaccharide(s) (e.g. glucose) is(are) used alone, the monosaccharide(s)

is(are) preferably used at a concentration of about 2.5 w/v% to 10 w/v%.

As a solvent for the polymerization, an aqueous solvent which is based on water (e.g. water, aqueous solution of lower alcohol, and the like) may be used, and water is usually preferably used in the case of production of amino acid etc.-containing particles. Because the anionic polymerization is initiated by hydroxide ion, the velocity of polymerization is influenced by pH of the reaction solution. When pH of the reaction solution is high, polymerization proceeds rapidly because of a high concentration of hydroxide ion. When pH is low, polymerization proceeds slowly. In the case of production of amino acid etc.-containing particles, an appropriate polymerization velocity is usually attained under an acidic condition of about pH 1.5 to 3.0. The acid added to the reaction solution in order to acidify it is not restricted, and hydrochloric acid may be preferably used as it does not have a bad influence on the reaction and vaporizes after the reaction. The concentration of hydrochloric acid is not restricted, and may be appropriately selected within the range of about 0.0005 N to 0.5 N.

The concentration of the cyanoacrylate monomer(s) in the polymerization reaction solution at the start of the reaction is not restricted, and is usually about 0.5 v/v% to 2.0 v/v%, preferably about 0.8 v/v% to 1.2 v/v%.

The reaction temperature is not restricted, and the reaction is preferably carried out at room temperature because it is simple. As for the reaction time, the reaction velocity varies depending on pH of the reaction solution, the kind of the solvent and the like, and therefore the reaction time is appropriately selected depending on these factors. The reaction time is usually, but not limited to, about 10 minutes to 5 hours, preferably about 30 minutes to 4 hours. As the obtained amino acid etc.-containing particles are usually used as neutral particles, it is preferred to neutralize the reaction solution by adding thereto a base such as aqueous sodium hydroxide solution or the like after completion of the reaction. Particles may be recovered by filtering the reaction solution after completion of the reaction through a filter, and washing the particles with sterilized water as appropriate.

In the amino acid etc. alone synthesis method of (2), the polymerization initiating/stabilizing effects exhibited by the amino acid structure are utilized, without using saccharides and without using polysorbates, which have been used as a polymerization initiator/stabilizer in the conventional method. Thus, in the case where particles are produced by this method, amino acid etc.-containing particles substantially do not contain, preferably do not contain at all, a saccharide, and substantially do not contain, preferably do not contain at all, a polysorbate. For example, nano-sized cyanoacrylate polymer particles with a uniform particle diameter can be obtained by dissolving an amino acid etc. molecule(s) which should be incorporated into the particles in a solvent; adding thereto a cyanoacrylate monomer(s) under stirring; and appropriately continuing stirring the mixture to allow the polymerization reaction to proceed. The particles may contain one kind of amino acid etc., or two or more kinds of amino acid etc. may be dissolved in a solvent to incorporate amino acid etc. into the particles at the same time.

In the case where particles are synthesized by the method of (2), the concentration of amino acid etc. in the polymerization reaction solution at the start of the reaction is not restricted, and is usually about 0.1 w/v% to 3 w/v%. In the case where particles are produced by a conventional method of (1), the concentration may be lower than the above-described concentration.

Conditions for a solvent for the polymerization reaction, the concentration of cyanoacrylate monomer(s) in the polymerization reaction solution at the start of the reaction, the reaction temperature and the reaction time in the method of (2) are the same as in the conventional method of (1).

By the above-described methods of (1) and (2), nano-sized amino acid etc.-containing particles with an average particle diameter of less than 1000 nm can be easily produced. The lower limit of the particle size is not restricted, and the particle diameter of the particles produced by the above-described polymerization reactions is usually about 7 nm or more. The average particle diameter of the particles is preferably 20 nm to 600 nm, more preferably 50 nm to 550 nm. The size of the particles can be regulated by regulating the concentration of cyanoacrylate monomer(s) in the reaction solution, pH, and/or the reaction time. In the case where at least one selected from saccharides and polysorbates is used as a polymerization initiator/stabilizer, the particle size can also be regulated by changing the concentration and/or the kind of the polymerization initiator/stabilizer (see, Patent Documents 3, 4, etc.). In general, the particle size becomes large in cases where pH of the reaction solution is high, where the reaction is carried out for a longer time, and where the concentration of saccharide(s) in the reaction solution is lowered; whereas, the particle size becomes small in cases where a polysorbate(s) is(are) used as a polymerization initiator/stabilizer. Particles with a desired size can be produced by appropriately combining these reaction conditions.

The electric charge (Zeta potential) of the amino acid etc.-containing particles is not restricted, and usually about -50 mV to 0 mV. "Zeta potential" represents an electric charge of the surface of particles, and is an indicator of the dispersion stability of particles. The particle size and the Zeta potential may be easily measured with, for example, a commercially available device utilizing a He-Ne laser (such as Zetasizer manufactured by Malvern Inst.UK).

According to the methods of (1) and (2) described above, an amino acid etc. molecule(s) is(are) incorporated in the polymer particles not only by adhesion to the particles but also through a covalent bond that is generated by binding of the -COO group in the amino acid structure to the carbon atom at the ethylene terminal of cyanoacrylate. By utilizing a functional group on the amino acid etc. bound to the polymeric moiety via covalent bond, amino acid etc.-containing particles can be immobilized on a desired material via covalent bond. The ratio of content of the amino acid etc. in the particles obtained by the above-described methods is usually about 20% to about 65%. The ratio of content of amino acid etc. may be calculated by measuring the absorbance of a liquid which has passed through a filter obtained in the filter washing steps after the polymerization at an appropriate wavelength, determining the amount of amino acid etc. in the filter-passing liquid (i.e. the amount of amino acid etc. not incorporated into particles) based on the measured absorbance, and by calculating the ratio according to the following equation: Content of Amino Acid etc. = (Amount of amino acid etc. added) - (Amount of amino acid etc. in filter-passing liquid)

$$\text{Ratio of Content of Amino Acid etc. (\%)} = \text{Content of amino acid etc.} / \text{Amount of amino acid etc. added} \times 100$$

The amino acid etc.-containing particles used in the present invention substantially do not contain an active antibacterial ingredient effective against phytopathogenic bacteria whose growth is to be inhibited. The term "active antibacterial ingredient" means a chemical component which can biochemically affect metabolic pathway and/or physiological functions of phytopathogenic bacteria to inhibit their growth, and specifically means a chemical component which can be used for inhibition of growth of the phytopathogenic bacteria, such as antibiotics or the like. The term "substantially do not contain" means that particles do not contain any active antibacterial ingredients at all, or that even if they contain an active antibacterial ingredient(s), the amount of the contained active antibacterial ingredient(s) is so small that the growth of phytopathogenic bacteria sensitive to the contained antibacterial ingredient(s) cannot be inhibited. In regard to the above-mentioned small amount by which the growth of sensitive bacteria cannot be inhibited, an amount of the active antibacterial ingredient(s) contained in a unit volume of the particles is defined as concentration in particles. When the growth of a sensitive phytopathogenic bacterium cannot be inhibited by treating the bacterium with the active antibacterial ingredient(s) in form of not being incorporated into particles at the same concentration as the above-defined concentration in particles, the concentration is considered to be an amount by which the growth of the sensitive bacterium cannot be inhibited. As particles used in the present invention, those not containing any active antibacterial ingredients such as antibiotics and the like at all are preferred.

It is known that cyanoacrylate polymer nanoparticles not containing an amino acid can exhibit an antibacterial activity against Gram-positive bacteria (Patent Document 6). The detailed principle by which amino acid-containing cyanoacrylate polymer nanoparticles can exhibit their antibacterial activity against not only Gram-positive bacteria but also Gram-negative bacteria is uncertain. Although the scope of the present invention is not bound by theory, the following is presented relating to the principle. That is, the amino group is lipophilic, and by incorporating an amino acid(s) into nanoparticles, lipophilic amino groups are introduced into the particles, and thus affinity of the particles for the lipid layer of the surface of Gram-negative bacteria increases, which enables the particles to adhere to, and thus to inhibit the growth of, Gram-negative bacteria.

The kind of the phytopathogenic bacteria to which the present invention is applied is not restricted. The agent of the present invention is effective against various kinds of phytopathogenic bacteria. Examples of the Gram-negative phytopathogenic bacteria include *Ralstonia, Pseudomonas, Erwinia, Xanthomonas, Burkholderia, Agrobacterium, Pantoea, Rhizomonas, Xylella, Acidovorax, Xylophilus* and the like. Examples of the Gram-positive phytopathogenic bacteria include *Clavibacter, Streptomyces, Curtobacterium, Arthrobacter, Rhodococcus, Bacillus, Clostridium* and the like. Table 1 below is a list of specific examples of especially representative bacteria selected from those mentioned above. Among these, the antibacterial agent of the present invention may be especially effective against bacteria belonging to genus *Ralstonia,* bacteria belonging to genus *Clavibacter* and bacteria belonging to genus *Curtobacterium,* but the scope of the present invention is not restricted thereto.

Table 1

| Genus Name of Bacteria | Gram Staining | Representative Bacteria and Plant Diseases |
|---|---|---|
| *Ralstonia* | Negative | *R. solanacearum* (bacterial wilt of solanaceous plants) |
| *Clavibacter* | Positive | *C. michiganensis* subsp. *michiganensis* (canker of tomato) |
| *Curtobacterium* | Positive | *C. flaccumfaciens* pv. *oortii* (canker of tulip), *C. flaccumfaciens pv. flaccumfaciens* (bacterial wilt of kidney bean) |
| *Pseudomonas* | Negative | *P. syringae* (causative of bacterial diseases such as bacterial blight, browning, etc. in many plants including solanaceous plants, gramineous plants, cruciferous plants and cucurbitaceous plants) |

(continued)

| Genus Name of Bacteria | Gram Staining | Representative Bacteria and Plant Diseases |
|---|---|---|
| *Erwinia* | Negative | *E. carotovora* subsp.*carotovora* (causative of soft rot in many crops including solanaceous plants and cruciferous plants) |
| *Xanthomonas* | Negative | *X. campestris* (bacterial leaf blight of rice, black rot of crucifers, etc.), *X. axonopodis* pv. *citri* (citrus canker) |
| *Burkholderia* | Negative | *B. glumae* (bacterial grain rot of rice), *B. plantarii* (damping-off of rice seedlings) |

The antibacterial agent for a phytopathogenic bacterium/bacteria according to the present invention may consist only of the amino acid etc.-containing particles, or may be in the form of a dispersion liquid prepared by dispersing the particles in an appropriate solvent. For example, the agent of the present invention may be provided in the form of freeze-dried particles, or in the form of a dispersion liquid containing the particles at a concentration higher than a concentration ordinary used or at a ready-to-use concentration. The antibacterial agent may comprise a single kind of the amino acid etc.-containing particles, or may comprise two or more kinds of the amino acid etc.-containing particles.

The antibacterial agent according to the present invention is useful as an agent for controlling plant disease(s). The agent can be applied to cultivated plants, or can be used for bactericidal washing of farm equipments and household gardening instruments which have been or might be contaminated with phytopathogenic bacteria. The amount of the agent to be applied to plants can be appropriately selected depending on the level of development of diseases. For example, a particle dispersion liquid with a particle concentration of, but not limited to, about 0.1 μg/ml to 1000 mg/ml, or about 0.1 μg/ml to 100 mg/ml, or about 1 μg/ml to 10 mg/ml may be sprayed on plant body (including any parts of a plant individual such as root, stem, leaf, fruit, flower and the like), ground soil, planter soil, seedling box or the like. Seed disinfection can also be carried out by immersing seeds in a particle dispersion liquid. In the case of sterilization of farm equipments, the particles may be dispersed in water or an alcohol solvent or the like at an appropriate concentration, e.g. the above-described concentration, to immerse farm equipments therein or to spray farm equipments therewith. Although the antibacterial activity (MIC value and MBC value) of the amino acid etc.-containing particles may vary depending also on the kind of phytopathogenic bacteria, the particles can exhibit their antibacterial activity when used at a concentration described above.

Examples of the plant to which the agent of the present invention is applied include solanaceous plants (tomato, eggplant, potato, tobacco, bell pepper, chili pepper and the like), leguminous plants (kidney bean, soybean, peanut, cowpea, azuki bean and the like), cruciferous plants (Chinese cabbage, turnip, cabbage, radish, oilseed rape and the like), gramineous plants (rice, wheat, maize, barley, rye, sugarcane and the like), cucurbitaceous plants (cucumber, melon, watermelon, pumpkin, wax gourd and the like), liliaceous plants (tulip, lily, onion, asparagus, Welsh onion, leek, garlic and the like), and rutaceous plants (especially citrus: *Citrus unshiu, Citrus junos,* lemon, *Citrus grandis, Citrus iyo, Cirrus hassaku,* grapefruit and the like). Among these, preferred examples thereof include solanaceous plants, leguminous plants, cruciferous plants and cucurbitaceous plants, and especially preferred examples thereof include solanaceous plants, but not limited thereto.

EXAMPLES

The present invention will now be described more concretely by way of examples. However, the present invention is not restricted to the examples below.

1. Production of Amino Acid-Containing Nanoparticles (Part 1)

Using basic amino acids (arginine, histidine, lysine), acidic amino acids (aspartic acid, glutamic acid) and neutral amino acids (alanine, glycine, leucine, valine, isoleucine, serine, threonine, phenylalanine, tryptophan, tyrosine, cystine, methionine, glutamine, asparagine, proline), cyanoacrylate polymer particles containing an amino acid were produced.

(1) Dex70-Amino Acid Synthesis System (Production Example 1)

In 10 mL of 0.01N HCl, 20 mg of amino acid and 100 mg of dextran 70K were dissolved, and the pH of the solution was adjusted to pH=2 as needed using 1N hydrochloric acid. Concerning Cys and Met, the pH was adjusted to pH=3 using 0.001N HCl solution.

(2) Amino Acid Alone Synthesis System (Production Example 2)

In 10 mL of 0.001N HCl, 100 mg of amino acid was dissolved, and the pH of the solution was adjusted to pH=3 as needed using 1N hydrochloric acid.

Under stirring solutions of (1) and (2), 100 μL of nBCA was added thereto, and each mixture was stirred for 3 hour to allow the polymerization reaction to proceed. The reaction solutions were neutralized (pH7.8) by adding 1N NaOH dropwise thereto, and then stirred for additional 30 minutes, followed by centrifugal filtration of the reaction solutions at 3500 rpm/15 min using a Centriprep (YM-10) filter (MILLIPORE). Distilled water was added to the liquids which did not pass through the filter, and the resulting mixtures were subjected to centrifugal filtration again to wash the polymerized particles. This centrifugal washing operation was repeated 4 times in total to obtain various amino acid-containing particles.

The average particle diameter and the Zeta-potential of the obtained particles were measured with a commercially available Zetasizer (produced by Malvern Inst.UK). The results of the measurement on the particles of Production Example 1 (Dex70-Amino acid synthesis system) are shown in Table 2, and the results of the measurement on the particles of Production Example 2 (Amino acid alone synthesis system) are shown in Table 3.

Table 2

| | Ratio of Amino Acid Content (%) | Average Particle Diameter (nm) | Peak1 (nm) | Peak Width (nm) | Zeta-Potential (-mV) |
|---|---|---|---|---|---|
| Neutral Amino Acid | | | | | |
| 0.01HCl-Ala+D70 | 33.5 | 145; PDI:0.138 | 143 (100%) | 50.5 | 10.9 |
| 0.01HCl-Gly+D70 | 51.6 | 133; PDI:0.029 | 131 (100%) | 33.7 | 16.5 |
| 0.01HCl-Val+D70 | 32.3 | 126; PDI:0.150 | 119 (100%) | 66.4 | 13.4 |
| 0.01HCl-Leu+D70 | 32.7 | 145; PDI:0.228 | 132 (100%) | 62.9 | 10.4 |
| 0.01HCl-Ile+D70 | 29.3 | 122; PDI:0.162 | 113 (99.7%) | 38.8 | 11.8 |
| 0.01HCl-Ser+D70 | 31.1 | 133; PDI:0.090 | 131 (100%) | 47.3 | 14.4 |
| 0.01HCl-Thr+D70 | 28.4 | 147; PDI:0.153 | 144 (99.8%) | 57.2 | 7.69 |
| 0.001HCl-Cys+D70 | 26.6 | 417; PDI:0.048 | 466 (100%) | 88.7 | 9.07 |
| 0.001HCl-Met+D70 | 29.1 | 142; PDI:0.048 | 143 (100%) | 45.0 | 8.32 |
| 0.01HCl-Phe+D70 | 22.9 | 136; PDI:0.219 | 122 (100%) | 46.2 | 5.42 |
| 0.01HCl-Tyr+D70 | 27.6 | 122; PDI:0.078 | 117(100%) | 40.4 | 5.84 |
| 0.01HCl-Trp+D70 | 31.4 | 123; PDI:0.062 | 120 (100%) | 32.2 | 13.5 |
| 0.01HCl-Asn+D70 | 23.9 | 144; PDI:0.162 | 139 (98.6%) | 42.4 | 10.2 |
| 0.01HCl-Gln+D70 | 27.4 | 137; PDI:0.198 | 127 (98.8%) | 56.0 | 8.6 |
| 0.01HCl-Pro+D70 | 26.0 | 114; PDI:0.095 | 106 (100%) | 42.1 | 14.7 |
| Acidic Amino Acid | | | | | |
| 0.01HCl-Asp+D70 | 28.5 | 138; PDI:0.151 | 137 (100%) | 72.5 | 10.6 |
| 0.01HCl-Glu+D70 | 21.7 | 135; PDI:0.233 | 117(98.6%) | 55.0 | 9.83 |
| Basic Amino Acid | | | | | |
| 0.01HCl-Lys+D70 | 36.0 | 153; PDI:0.143 | 160 (100%) | 69.9 | 20.2 |
| 0.01HCl-Arg+D70 | 31.6 | 135; PDI:0.117 | 136 (100%) | 54.3 | 24.7 |
| 0.01HCl-His+D70 | 35.3 | 286; PDI:0.148 | 303 (100%) | 89.5 | 10.9 |
| Control (containing no amino acid) | | | | | |
| 0.01HCl-D70 | - | 147; PDI:0.216 | 136(100%) | 58.9 | 26.6 |

Table 3

| | Ratio of Amino Acid Content (%) | Average Particle Diameter (nm) | Peak1 (nm) | Peak Width (nm) | Zeta-Potential (-mV) |
|---|---|---|---|---|---|
| 0.01HCl-Ala | 49.9 | 226; PDI:0.022 | 235 (100%) | 35.5 | 38.7 |
| 0.01HCl-Gly | 61.6 | 554; PDI:0.0167 | 547 (100%) | 37.4 | 48.1 |
| 0.01HCl-Pro | 48.8 | 287; PDI:0.315 | 273 (100%) | 66.4 | 4.04 |
| 0.01HCl-His | 51.2 | 320; PDI:0.228 | 332 (100%) | 52.9 | 4.51 |
| 0.01HCl-D70 | - | 147; PDI:0.216 | 136 (100%) | 58.9 | 26.6 |

2. Production of Amino Acid-Containing Nanoparticles (Part 2)

In 10 mL of 0.01N HCl, 20 mg of amino acid (glycine, arginine, aspartic acid, alanine) and 100 mg of dextran 60K were dissolved, and the pH of the solution was adjusted to pH=2 as needed using 1N hydrochloric acid. Under stirring the solutions, 100 μL of nBCA was added thereto, and each mixture was stirred for 3 hour to allow the polymerization reaction to proceed. The reaction solutions were neutralized (pH7.8) by adding 1N NaOH dropwise thereto, and then stirred for additional 30 minutes, followed by centrifugal filtration of the reaction solutions at 3500 rpm/15 min using a Centriprep (YM-10) filter (MILLIPORE). Distilled water was added to the liquids which did not pass through the filter, and the resulting mixtures were subjected to centrifugal filtration again to wash the polymerized particles. This centrifugal washing operation was repeated 4 times in total to obtain various amino acid-containing particles. The results of measurement of average particle diameter and Zeta-potential of the obtained particles using a commercially available Zetasizer (produced by Malvern Inst.UK) are shown in Table 4.

Table 4

| | Ratio of Amino Acid Content (%) | Average Particle Diameter (nm) | Peak1 (nm) | Peak Width (nm) | Zeta-Potential (-mV) |
|---|---|---|---|---|---|
| D60Gly | 52.0 | 175; PDI:0.052 | 188 | 52.1 | 21.5 |
| D60Arg | 32.7 | 307; PDI:0.096 | 341 | 95.2 | 15.8 |
| D60Asp | 24.3 | 140; PDI:0.128 | 163 | 65.1 | 12.3 |
| D60Ala | 39.6 | 176; PDI:0.047 | 189 | 52.2 | 19.5 |

3. Antibacterial Activity against Bacteria Pathogenic to Agricultural Crops

(Investigation of Measurement Conditions)

[Bacterial Strains Used]

(1) Tomato canker-causing bacteria

*Clavibacter michiganensis subsp.michiganensis* (field isolates KNOB 16, KNOB23)

(2) Eggplant wilt-causing bacteria

*Ralstonia solanacearum* (field isolates KNOB38, KNOB39)

[Culture Media]

Heart infusion (HI) medium (NISSUI PHARMACEUTICAL)

PSA medium (Wakimoto's prescription: 1 L of decoction of 300 g of potato, 5 g of peptone, 20 g of sucrose, 2 g of $Na_2HPO_4 \cdot 12H_2O$, 0.5 g of $Ca(NO_3)_2 \cdot 4H_2O$, 15-20 g of agar, pH6.8-7.0)

[Antibacterial Agent Used]

ampicillin (ABPC), streptomycin (ST), kasugamycin (KAS), ethanol, glycine-containing nanoparticles (D60Gly)

[Method]

(1) Freeze-stored 4 strains were seeded on heart infusion medium and PSA medium.
(2) Seeded bacteria were cultured at 25°C for 48 hours.
(3) The antibacterial activity was assessed by measurement of the minimum inhibitory concentration (MIC) in accordance with a broth microdilution method. HI medium prepared without agar was used as a liquid medium. As for PSA liquid medium, because it showed time-dependent precipitation of starch, PSA liquid medium was centrifuged (3000 rpm x 10 minutes) before the tests and the supernatant was used. The above-described antibacterial agents were added to the liquid media at various concentrations, respectively, and the cultured bacteria described in (2) were inoculated thereto, followed by judgement of the results 24 hours and 48 hours after inoculation. The tests were repeated three times (n = 3).

[Results]

MIC values against tomato canker-causing bacteria (KNOB 16, KNOB23) and eggplant wilt-causing bacteria (KNOB38, KNOB39) are shown in Table 5 below. Eggplant wilt-causing bacteria (KNOB38, KNOB39) did not grow in PSA medium.

Table 5

| Strain Name | Culture Media | Culturing Time | MIC(μg/ml) | | | | |
|---|---|---|---|---|---|---|---|
| | | | ABPC | ST | KAS | EtOH | D60Gly-nanoparticles |
| KNOB16 | PSA | 24H later | 0.5 | 4 | 16 | 60 | 16 |
| | | 48H later | 1 | 8 | 16 | 7.5 | 8 |
| KNOB23 | PSA | 24H later | 0.5 | 4 | 16 | 7.5 | 4 |
| | | 48H later | 0.5 | 4 | 32 | 15 | 8 |
| KNOB16 | HI | 24H later | 0.25 | 2 | 32 | 15 | 16 |
| | | 48H later | 0.25 | 2 | 32 | 30 | 32 |
| KNOB23 | HI | 24H later | 0.25 | 1 | 32 | 15 | 16 |
| | | 48H later | 0.25 | 1 | 32 | 30 | 32 |
| KNOB38 | HI | 24H later | 0.5 | 8 | 8 | 7.5 | 64 |
| | | 48H later | 0.5 | 8 | 16 | 15 | 128 |
| KNOB39 | HI | 24H later | 0.5 | 8 | 8 | 7.5 | 64 |
| | | 48H later | 0.5 | 8 | 16 | 7.5 | 64 |
| Note) Some precipitates which seemed to be starch were observed in 48 hour-cultures in PSA medium. | | | | | | | |

[Discussion]

The antibacterial activity of nanoparticles against tomato canker-causing bacteria was equal to or stronger than KAS, which is used as a disinfectant for various bacteria pathogenic to crops, and was equal to ethanol. The antibacterial activity of nanoparticles against eggplant wilt-causing bacteria was observed to be four times weaker than KAS. Alcohol showed an antibacterial activity stronger than KAS and nanoparticles.

PSA liquid medium showed precipitates, which made the result judgement unclear. Thus HI liquid medium is suitable. MIC values could be determined by 24-hour culturing. Hence, as culture conditions, 48-hour culturing on an agar plate followed by MIC determination 24 hours after addition of a test drug is suitable.

4. Antibacterial Activity against Bacteria Pathogenic to Crops (Antibacterial

Activity of Various Amino Acid-Containing Particles)

The antibacterial activity of nanoparticles containing Gly, Arg, Asp, or Ala produced above was examined. As test bacteria, field isolates listed in Table 6, tomato canker-causing bacteria standard strains (JCM1370, JCM1373), and kidney bean wilt-causing bacterium *Curtobacterium flaccumfaciens* pv. *flaccumfaciens* standard strain (JCM1347) were used. After 48-hour culturing on HI medium, the test drugs were added, respectively, and MIC values were determined 24 hours after the addition.

Table 6

| Strain Name | MIC (μg/ml) | | | | | | | |
|---|---|---|---|---|---|---|---|---|
| | ST | ABPC | KAS | EtOH | D60Arg | D60Asp | D60Ala | D60Gly |
| KNOB30 | 1.56 | 0.5 | 32 | 30 | 15.6 | 7.8 | 7.8 | 3.9 |
| KNOB33 | 0.78 | 0.25> | 64 | 30 | 7.8 | 3.9 | 3.9 | 3.9 |
| KNOB64 | 1.56 | 0.25> | 64 | 30 | 31.26 | 15.6 | 15.6 | 15.6 |
| KNOB67 | 1.56 | 0.25> | 64 | 30 | 31.25 | 15.6 | 7.8 | 7.8 |
| KNOB75 | 1.56 | 0.5 | 64 | 60 | 15.6 | 7.8 | 7.8 | 7.8 |
| KNOB105 | 1.56 | 0.25> | 32 | 15 | 15.6 | 7.8 | 7.8 | 7.8 |
| KNOB106 | 1.56 | 0.25> | 32 | 7.5 | 15.6 | 7.8 | 7.8 | 7.8 |
| KNOB108 | 1.56 | 0.5 | 32 | 15 | 15.6 | 7.8 | 7.8 | 7.8 |
| KNOB110 | 1.56 | 0.25> | 32 | 15 | 15.6 | 7.8 | 7.8 | 7.8 |
| JCM1347 | 0.39 | 2 | 128 | 15 | 15.6 | 15.6 | 15.6 | 15.6 |
| JCM1370 | 3.9 | 0.5 | 128 | 15 | 15.6 | 7.8 | 3.9 | 3.9 |
| JCM1373 | 7.8 | 1 | 64 | 30 | 3.9 | 3.9 | 3.9 | 3.9 |

It was confirmed that nanoparticles containing an amino acid other than Gly also could exhibit an antibacterial activity against phytopathogenic bacteria.

5. Toxicity Test of Amino Acid-Containing Nanoparticles

Amino acid-containing nanoparticles produced above were administered to mice of 20 g to 24 g body weight in a dose of 10 mg intravenously via tail vein, intraperitoneally or subcutaneously, or in a dose of 50 mg orally. A cutaneous application test was also carried out. As a result, no abnormalities were observed in body weight change, urination and defecation, and behaviors.

## Claims

1. An antibacterial agent for a phytopathogenic bacterium/bacteria, comprising as an effective ingredient cyanoacrylate polymer particles having an average particle diameter of less than 1000 nm, which particles contain at least one

selected from the group consisting of amino acids, amino acid derivatives, and oligomers and polymers thereof, and substantially do not contain an active antibacterial ingredient effective against a phytopathogenic bacterium/bacteria.

**2.** The antibacterial agent according to claim 1, comprising as an effective ingredient the particles containing at least one selected from the group consisting of amino acids, amino acid derivatives, and oligomers thereof.

**3.** The antibacterial agent according to claim 2, comprising as an effective ingredient the particles containing an amino acid(s).

**4.** The antibacterial agent according to claim 2 or 3, wherein said amino acid is at least one selected from the group consisting of arginine, histidine, lysine, aspartic acid, glutamic acid, alanine, glycine, leucine, valine, isoleucine, serine, threonine, phenylalanine, tryptophan, tyrosine, cystine or cysteine, glutamine, asparagine, proline, methionine, $\beta$-alanine, $\gamma$-aminobutyric acid, carnitine, $\gamma$-aminolevulinic acid, and $\gamma$-aminovaleric acid.

**5.** The antibacterial agent according to claim 4, wherein said amino acid is at least one selected from the group consisting of glycine, arginine, aspartic acid, and alanine.

**6.** The antibacterial agent according to claim 2 or 4, wherein said amino acid derivative is at least one selected from the group consisting of creatine, ornithine, thyroxine, desmosine, hydroxyproline, hydroxylysine, phosphoserine, theanine, kainic acid, tricholomic acid, and sarcosine.

**7.** The antibacterial agent according to any one of claims 1 to 6, wherein said particles are those produced by anionically polymerizing a cyanoacrylate monomer(s) in the presence of at least one selected from the group consisting of amino acids, amino acid derivatives, and oligomers and polymers thereof, and substantially in the absence of a saccharide and substantially in the absence of a polysorbate.

**8.** The antibacterial agent according to any one of claims 1 to 6, wherein said particles are those produced by anionically polymerizing a cyanoacrylate monomer(s) in the presence of at least one selected from the group consisting of amino acids, amino acid derivatives, and oligomers and polymers thereof, and in the presence of at least one selected from the group consisting of saccharides and polysorbates.

**9.** The antibacterial agent according to claim 8, wherein said saccharide is at least one selected from the group consisting of monosaccharides having a hydroxyl group(s), disaccharides having a hydroxyl group(s), and polysaccharides having a hydroxyl group(s).

**10.** The antibacterial agent according to any one of claims 1 to 9, wherein said cyanoacrylate is *n*-butyl cyanoacrylate.

**11.** The antibacterial agent according to any one of claims 1 to 10, wherein said phytopathogenic bacterium/bacteria is(are) at least one selected from the group consisting of bacteria belonging to genus *Ralstonia,* bacteria belonging to genus *Clavibacter,* bacteria belonging to genus *Curtobacterium,* bacteria belonging to genus *Pseudomonas,* bacteria belonging to genus *Erwinia,* bacteria belonging to genus *Xanthomonas,* and bacteria belonging to genus *Burkholderia.*

**12.** The antibacterial agent according to claim 11, wherein said phytopathogenic bacterium/bacteria is(are) at least one selected from the group consisting of bacteria belonging to genus *Ralstonia* and bacteria belonging to genus *Clavibacter.*

**13.** An agent for plant disease control comprising the antibacterial agent according to any one of claims 1 to 12.

**14.** The agent for plant disease control according to claim 13, which is applied to at least one selected from the group consisting of solanaceous plants, leguminous plants, cruciferous plants, gramineous plants, cucurbitaceous plants, liliaceous plants, and rutaceous plants.

**15.** The agent for plant disease control according to claim 14, which is applied to a solanaceous plant(s).

**16.** The agent for plant disease control according to claim 15, wherein the solanaceous plant(s) is(are) tomato, eggplant, potato, tobacco, bell pepper, and/or chili pepper.

**17.** A method for inhibiting growth of a phytopathogenic bacterium/bacteria, comprising bringing a phytopathogenic bacterium/bacteria into contact with cyanoacrylate polymer particles having an average particle diameter of less than 1000 nm, which particles contain at least one selected from the group consisting of amino acids, amino acid derivatives, and oligomers and polymers thereof, and substantially do not contain an active antibacterial ingredient effective against a phytopathogenic bacterium/bacteria.

**18.** A method for plant disease control, comprising bringing a plant body, plant seed, ground soil, planter soil, seedling box, farm equipment, or a gardening instrument into contact with cyanoacrylate polymer particles having an average particle diameter of less than 1000 nm, which particles contain at least one selected from the group consisting of amino acids, amino acid derivatives, and oligomers and polymers thereof, and substantially do not contain an active antibacterial ingredient effective against a phytopathogenic bacterium/bacteria.

## INTERNATIONAL SEARCH REPORT

International application No.
PCT/JP2013/050925

A. CLASSIFICATION OF SUBJECT MATTER
*A01N37/34*(2006.01)i, *A01N37/44*(2006.01)i, *A01P3/00*(2006.01)i

According to International Patent Classification (IPC) or to both national classification and IPC

B. FIELDS SEARCHED

Minimum documentation searched (classification system followed by classification symbols)
A01N37/34, A01N37/44, A01P3/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2013 |
| Kokai Jitsuyo Shinan Koho | 1971-2013 | Toroku Jitsuyo Shinan Koho | 1994-2013 |

Electronic data base consulted during the international search (name of data base and, where practicable, search terms used)
JSTPlus/JST7580(JDreamII)

C. DOCUMENTS CONSIDERED TO BE RELEVANT

| Category* | Citation of document, with indication, where appropriate, of the relevant passages | Relevant to claim No. |
|---|---|---|
| Y | WO 2009/084494 A1 (Yokohama City University), 09 July 2009 (09.07.2009), claims & US 2010/0285140 A1 & EP 2236143 A1 & CN 101959523 A | 1-18 |
| Y | Shoichi SHIROTAKE, "Atarashii Kokin Kijo o Yusuru Nano Polymer to Koseibusshitsu Taiseikin eno Oyo", Convertech, 15 February 2011 (15.02.2011), vol.39, no.2, pages 112 to 116, particularly, page 114, column 2 to page 115, column 3, page 116, columns 2 to 3 | 1-18 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 09 April, 2013 (09.04.13) | 23 April, 2013 (23.04.13) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.
PCT/JP2013/050925

C (Continuation). DOCUMENTS CONSIDERED TO BE RELEVANT

| Category* | Citation of document, with indication, where appropriate, of the relevant passages | Relevant to claim No. |
|---|---|---|
| Y | WO 2010/101178 A1 (Yokohama City University), 10 September 2010 (10.09.2010), claims & US 2012/0027821 A1 & EP 2404598 A1 & CN 102361636 A | 1-18 |
| P,X | WO 2012/133648 A1 (Shoichi SHIROTAKE), 04 October 2012 (04.10.2012), claims (Family: none) | 1-18 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H11503148 A
- JP 3002504526 A
- JP 2008127538 A
- WO 2008126846 A
- JP 2008208070 A
- WO 2009084494 A
- WO 2010101178 A


### Non-patent literature cited in the description


- **CHRISTINE VAUTHIER et al.** *Adv. Drug Deliv. Rev.,* 2003, vol. 55, 519-548